# EUROPÄISCHE PATENTSCHRIFT

(11) **EP 0 754 899 B1**
(45) Veröffentlichungstag und Bekanntmachung des Hinweises auf die Patenterteilung: **06.11.2002**
(21) Anmeldenummer: 95111324.0
(22) Anmeldetag: 19.07.1995
(51) Int. Cl.: F16L 37/38, F16L 35/00

(54) **Kugelventil mit Schnellanschluss**
Ball-valve with quick-acting connector
Soupape sphérique avec raccord rapide

(43) Veröffentlichungstag der Anmeldung: 22.01.1997
(73) Patentinhaber: FIMCIM S.r.l., I-20121 Milano (IT)
(72) Erfinder: Cimberio, Renzo, I-28017 S. Maurizio d'Opaglio (IT); Arosio, Massimo, I-26027 Rivolta d'Adda (IT)
(74) Vertreter: Zanella, Ireneo

(56) Entgegenhaltungen:
- EP-A- 0 375 826
- WO-A-94/13990
- DE-A- 3 725 546
- US-A- 4 552 333

## Beschreibung

Die vorliegende Erfindung bezieht sich auf ein Kugelventil mit einer Schnellkupplung.

Es ist vom Stand der Technik bekannt, zur Verbindung von Leitungen, die zum Fördern von unter Druck stehenden Fluiden verwendet werden, wie zum Beispiel Gas oder Wasser, Anschlüsse in Form von Schnellkupplungen vorzusehen, die es erlauben, das Ende einer Förderleitung zu einem Verbraucher schnell anzuschließen.

Es ist weiterhin bekannt, Druckleitungen mit Absperrventilen auszurüsten, die es erlauben, den Durchfluß eines Fluids zu öffnen, zu verändern oder zu unterbrechen.

Diese Absperrventile sind gewöhnlich in Abstand vom Schnellanschluß oder Schnellkupplung angeordnet, somit ist eine unmittelbare Kontrolle des Öffnungs- bzw. Sperrzustandes des Ventils in dem Moment, in welchem die Verbindung der Leitungsenden mit Hilfe des Schnellanschlusses erfolgt, nicht möglich.

Man hat weiterhin festgestellt, daß die bekannten Schnellanschlüsse nicht immer vollständig dicht sind und deswegen Leckverluste nicht auszuschließen sind, wenn die zwei Enden einer Leitung über einen Schnellanschluß verbunden werden, wodurch das Austreten von Gas oder auch Wasser eintritt.

Das Dokument WO94/13990 offenbart eine Schnellkupplung, die, wie z. B. auf Seite 6, Zeilen 15 - 17 angegeben, durch einen rohrförmigen Schnellkupplungskörper (25), ein Kugelventil (26) und ein dazwischenliegendes mittleres Verbindungselement (27) gebildet ist, das den Schnellkupplungskörper (25) und das Kugelventilgehäuse (26) verbindet.

Auf dem Schnellkupplungskörper 25 ist eine verschiebbare Muffe (30) angeordnet und geführt, die am zum Kugelventil (26) zugewandten Muffenende einen ringförmigen Wulst aufweist, der mit einem vom Ventilbetätigungsgriff (120) abstehenden ohrenartigen Teil (132) zusammenwirkt.

Das auslaßseitige Ende des Schnellkupplungskörpers (25) bildet einen offenen Sitz (29) zur Aufnahme eines Anschlußes (21).

Bei dieser Schnellkupplung ist die verschiebbare Muffe (30) innerhalb der Länge des Schnellkupplungskörpers (25) hin- und herverschiebbar. Das genannte mittlere Verbindungselement (27) verursacht durch seine eigene Länge offensichtlich eine Verlängerung der Gesamtlänge, die die aus dem Schnellkupplungskörper (25) und dem Kugelventil (26) gebildeten Baugruppe haben würde. Dieser Umstand und die Tatsache, dass die verschiebbare Muffe (30) innerhalb der Länge des Schnellkupplungskörpers (25) beweglich ist, führen dazu, dass der Ventilbetätigungsgriff (120) eine beträchtliche Länge aufweisen soll, um den Abstand zwischen der Drehachse (116) des Ventilbetätigungsgriffes (120) und dem Muffenwulst zu überbrücken.

Ferner kann durch den offenen Sitz (29) im Schnellkupplungskörper (25) Schmutz eintreten.

Aufgabe der vorliegenden Erfindung ist es, die Nachteile des Standes der Technik zu vermeiden und einen Schnellanschluß oder Schnellkupplung vorzuschlagen, die in Kombination mit einem Kugelventil derart einfach und schnell einsetzbar ist, daß sie in höchstem Maße benutzungsfreundlich und sicher ist.

Erfindungsgemäß wird diese Aufgabe durch ein Kugelventil mit Schnellkupplung erreicht, die die Merkmale der Ansprüche aufweisen.

Es ist vorteilhaft, den Körper des Kugelventils mit zwei sich gegenüberliegenden Gewindeanschlüssen auszurüsten, um ein Verbinden des Ventils mit der Schnellkupplung sowie mit einer Förderleitung für das Fluid zu ermöglichen.

Weitere Vorteile der Erfindung können aus der folgenden Beschreibung eines in den beigefügten Zeichnungen dargestellten Ausführungsbeispiels entnommen werden.
Fig. 1 zeigt eine mit einem Kugelventil ausgestattene Schnellkupplung sowie einen von der Schnellkupplung getrennten Anschluß in Draufsicht,
Fig. 2 zeigt die mit dem sich in der Sperrposition befindenden Kugelventil verbundene Schnellkupplung sowie den in die Schnellkupplung eingeführten Anschluß in Draufsicht,
Fig. 3 zeigt die mit dem sich zu Beginn des Öffnungsvorganges befindenden Kugelventil verbundene Schnellkupplung sowie den in die Schnellkupplung eingeführten Anschluß in Draufsicht,
Fig. 4 zeigt die mit dem sich in Öffnungsposition befindenden Kugelventil verbundene Schnellkupplung sowie den in die Schnellkupplung eingeführten Anschluß in Draufsicht,
Fig. 5 zeigt die mit dem sich in Sperrposition befindenden Kugelventil verbundene Schnellkupplung sowie den von der Schnellkupplung getrennten Anschluß im Querschnitt,
Fig. 6 zeigt die mit dem sich in Sperrposition befindenden Kugelventil verbundene Schnellkupplung sowie den in die Schnellkupplung eingeführten Anschluß im Querschnitt,
Fig. 7 zeigt die mit dem sich in Öffnungsposition befindenden Kugelventil verbundene Schnellkupplung sowie den in die Schnellkupplung eingeführten Anschluß im Querschnitt.

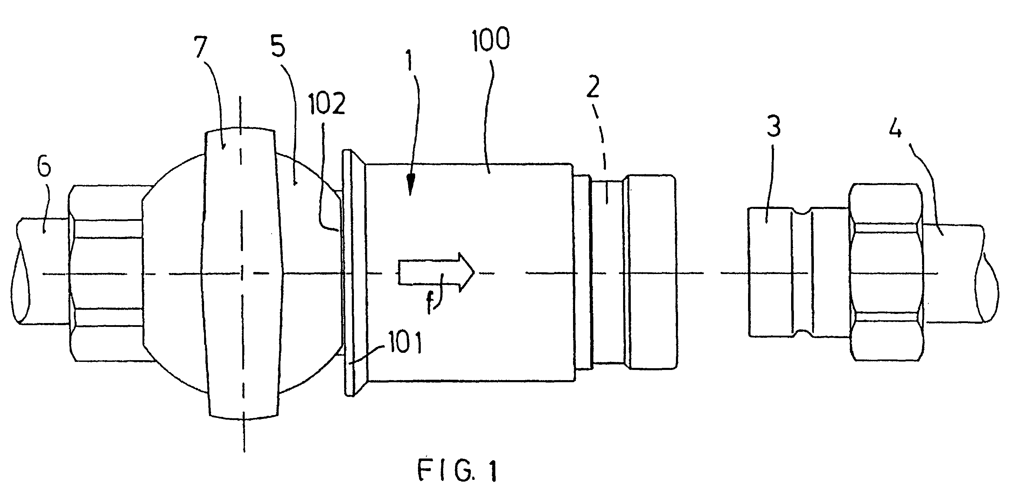

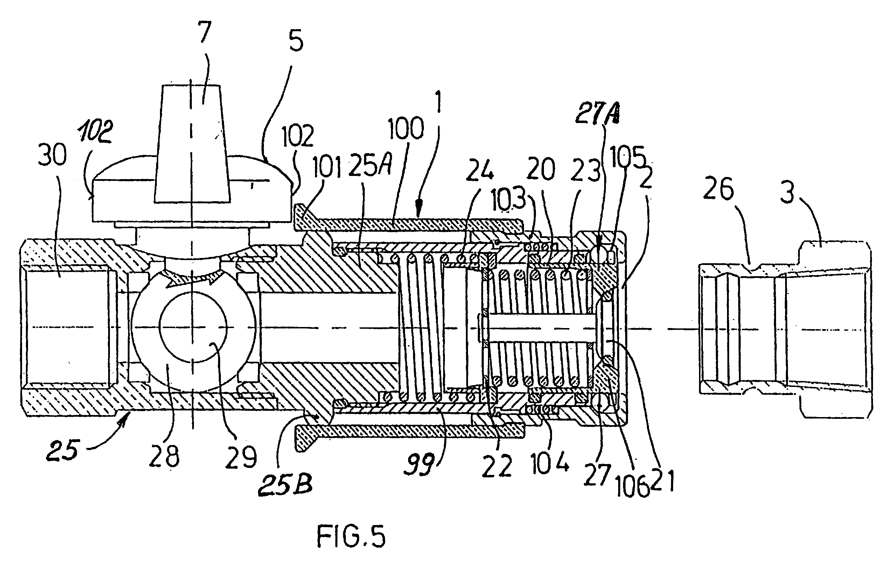

Wie der Fig. 1 entnommen werden kann, besteht die Schnellkupplung aus eine rohrförmigen Bauteil, das allgemein mit 1 gekennzeichnet ist. Die Schnellkupplung weist einen rohrförmigen Schnellkupplungskörper 99 auf, der einerseits mit einem Sitz 2 endet, in den ein mit einer Leitung 4 verbundener Leitungsanschluß 3 einführbar ist. Der rohrförmige Schnellkupplungskörper 99 der Schnellkupplung ist weiterhin mit seinem eintrittsseitigen Ende mit dem einen Anschlußbund 25B aufweisenden Ventilgehäuseanschluß 25A des Ventils 5 verbunden, das mit einer Förderleitung 6 für ein Fluid verbunden ist, Fig. 5. Das Ventil 5 ist mit einem Betätigungsgriff 7 betätigbar, das auf einen kugelförmigen Körper 28 einwirkt, der im Inneren des Ventilgehäuses 25 aufgenommen ist.

In Fig. 1 ist der Leitungsanschluss 3 nicht in den Sitz 2 der Schnellkupplung 1 eingeführt.

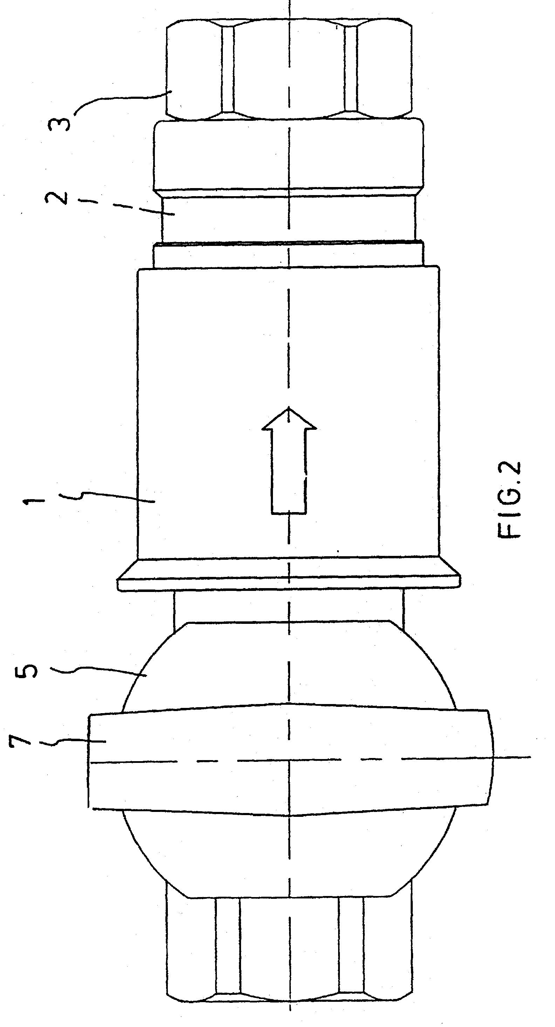

Wie der Fig. 2 entnommen werden kann, wird der Leitungsanschluß 3 zur Herstellung der Verbindung mit dem rohrförmigen Körper 99 der Schnellkupplung in den Sitz 2 des rohrförmigen Schnellkupplungskörpers 99 eingeführt, wo er blockiert wird.

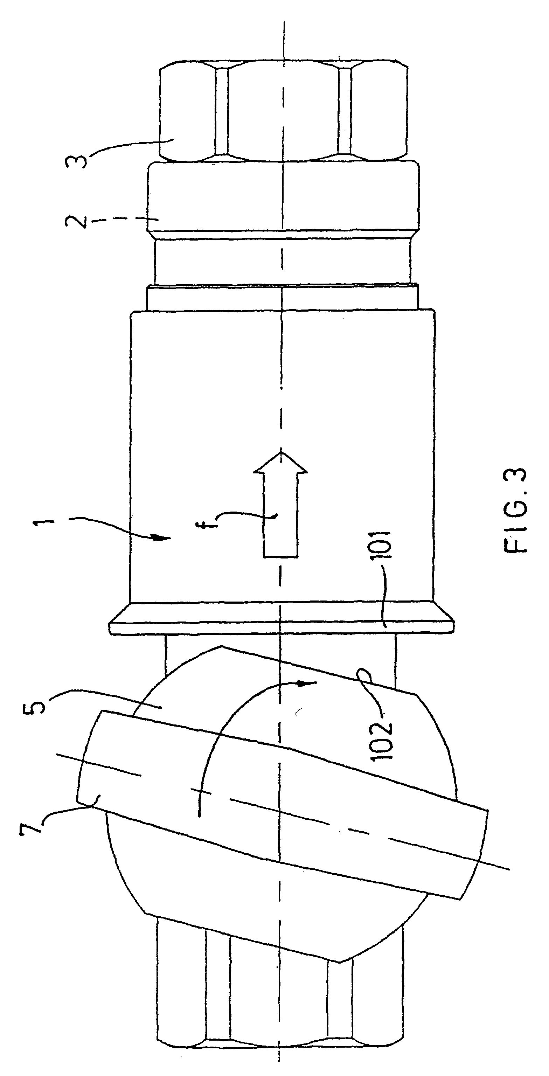

In Fig. 2 befindet sich das Ventil 5 noch in Sperrstellung. Der Fig. 3 kann entnommen werden, daß mit einer Drehung des Betätigungsgriffes 7, der im folgenden noch genauer beschrieben wird, ein allmähliches Öffnen des Ventils 5 erfolgt, um den Durchfluß des Fluids zu erlauben, wie durch den Pfeil (f) dargestellt.

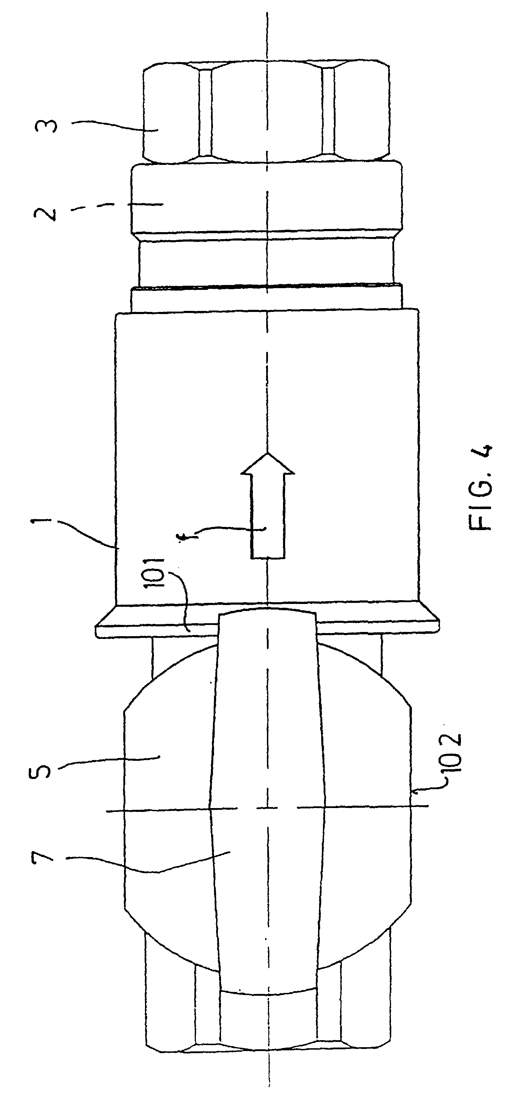

In Fig. 4 ist das Ventil in vollständig geöffneter Stellung dargestellt.

Die Figuren 5, 6, 7 zeigen die erfindungsgemäße Vorrichtung im Querschnitt.

Aus Fig. 5 kann der Aufbau des in den Sitz 2 des rohrförmigen Schnellkupplungskörpers 99 einführbaren Leitungsanschlusses 3 entnommen werden.

Der rohrförmige Schnellkupplungskörpers 99 nimmt im Inneren eine verschiebbare Hülse 20 auf, die einen inneren Hülsenkranz 106 aufweist, der einen mit einer Platte 22 fest verbundenen Ventilzapfen 21 aufnimmt.

Die Hülse 20 stützt sich an einer Feder 23 ab, die sich ihrerseits auf der Platte 22 abstützt, und die Platte 22 stützt sich an einer Feder 24 ab, die sich gegen den mit einem Gewinde versehenen Ventilgehäuseanschluß 25A des mit dem rohrförmigen Schnellkupplungskörpers 99 verbundenen Ventils 5 abstützt.

Der Verbindungsanschluß 3 weist eine äußere Umfangsnut 26 auf, mit der Kugeln 27 eines Kugelkranzes 27A beim Einführen des Leitungsanschlusses 3 in den Sitz 2 in Wirkverbindung treten, um ein sicheres Festlegen des Leitungsanschlusses 3 im Inneren der rohrförmigen Schnellkupplung 1 zu gewährleisten. Wie der Fig. 5 entnommen werden kann, ist das Kugelelement 28 des Ventils 5 derart einstellbar, daß die Durchgangsbohrung 29 des Kugelelementes 28 quer bezüglich des Durchgangskanals 30 des Ventils 5 angeordnet ist, wobei in diesem Fall der Durchfluß des Fluids gesperrt wird.

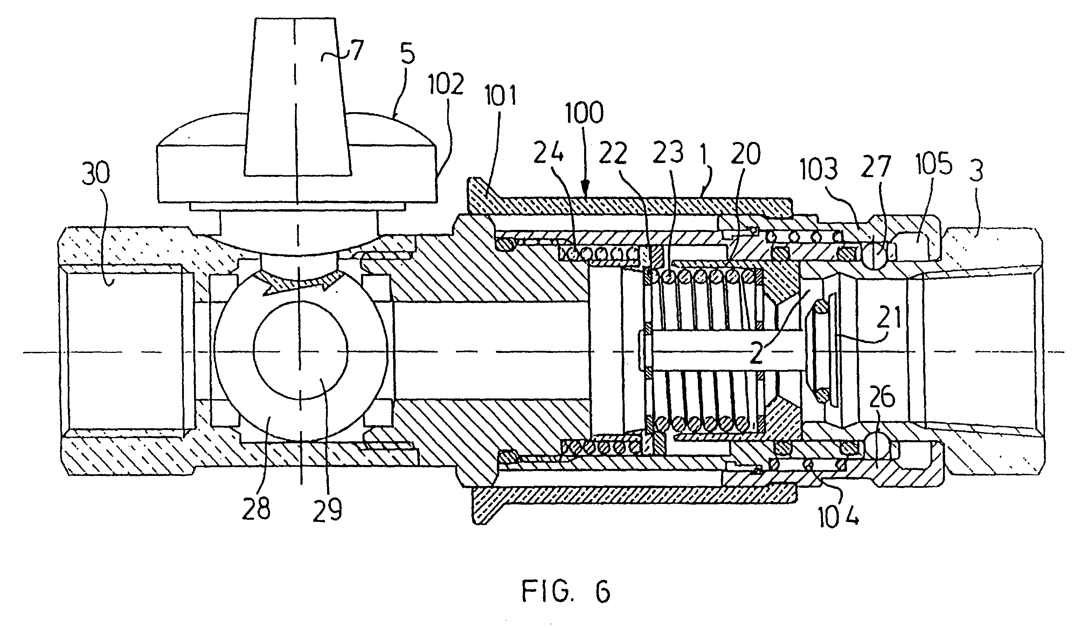

In Fig. 6 ist dargestellt, wie der Leitungsanschluß 3 in den rohrförmigen Schnellkupplungskörper 99 eingeführt ist und die Kugeln 27 mit der Nut 26 des Leitungsanschlusses 3 in Wirkverbindung treten, wobei in dieser Weise der Leitungsanschluß 3 blockiert wird.

Durch das Einführen des Anschlusses 3 wird die ringförmige Hülse 20 in das Innere des rohrförmigen Schnellkupplungskörpers 99 verschoben, auch der Ventilzapfen 21 bewegt sich über die von der zusammengedrückten Feder 23 belasteten Platte 22 in das Innere des rohrförmigen Schnellkupplungskörpers 99 ; gleichzeitig wird die Feder 24 komprimiert.

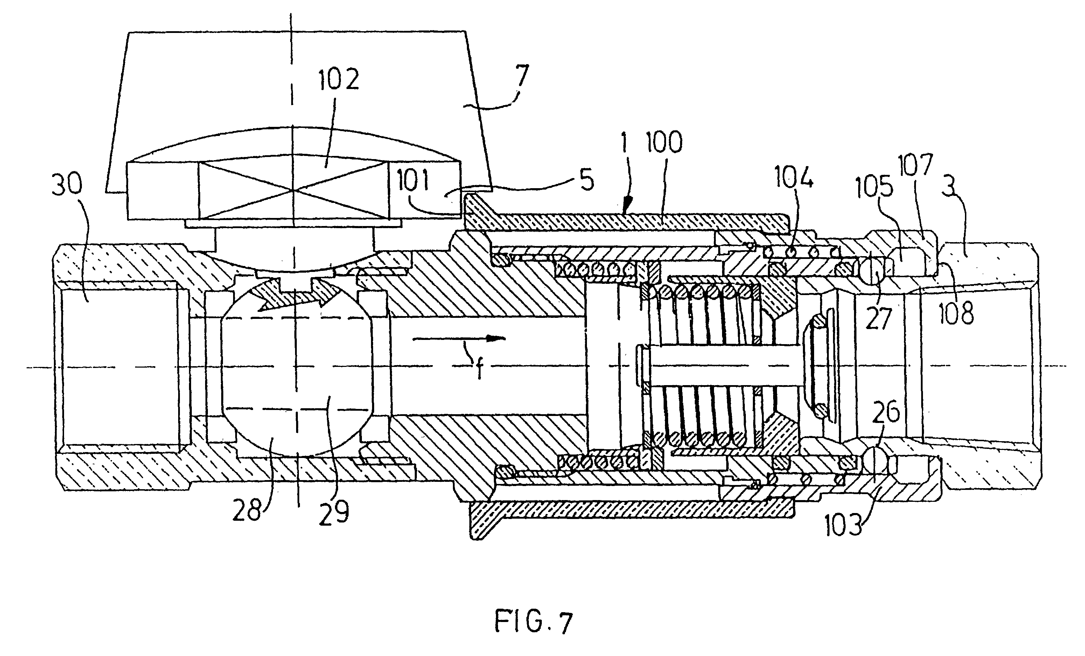

Wird in dieser Situation das Ventil 5 über das Betätigungsmittel 7 geöffnet, wie in Fig.7 dargestellt, wird die Ventilkugel 28 in eine Drehung um 90° versetzt, so daß die Durchgangsbohrung 29 mit dem Durchgangskanal 30 des Ventils 5 fluchtet und somit einen Durchfluß in Pfeilrichtung f erlaubt.

Aus den Figuren 5 bis 7 kann genauer entnommen werden, daß die rohrförmige Schnellkupplung 1 eine auf den Schnellkupplungskörper 99 angebrachte Muffe 100 aufweist, die auf den Anschlußwulst 25B in Längsrichtung verschiebbar ist. Das auf das Betätigungsmittel 7 des Ventils 5 gerichtete Ende der Muffe 100 weist einen ringförmigen Wulst 101 auf. Dieser Wulst 101, bei sich in Sperrposition befindendem Ventil 5 und bei nicht in den Sitz 2 des rohrförmigen Schnellkupplungskörpers 99 eingeführtem Leitungsanschluß 3, befindet sich in Kontakt mit einer ebenen Anschlagfläche 102, die auf dem Umfang des Gehäuses des Betätigungsgriffes 7 als sehne ausgebildet ist.

Dadurch, daß sich die Muffe 100 in der in Fig. 1 dargestellten Position gegen die ebene Anschlagfläche 102 des Betätigungsgriffes 7 abstützt, erscheint es offensichtlich, daß der derartig festgelegte Betätigungsgriff 7 nicht aktiviert sein kann, um das Ventil 5 zu öffnen. Somit ist ein Durchfluß des Fluids, in der durch den Pfeil f dargestellten Richtung, nicht möglich.

Nach dem Einführen des Leitungsanschlusses 3 und somit nach der Verbindung der Schnellkupplung 1 mit einem nicht gezeigten Verbraucher, erlaubt ein im Inneren der rohrförinigen Schnellkupplung 1 vorgesehenes Federsystem, das im folgenden noch genauer beschrieben wird, eine Verschiebung der Muffe 100 zu dem in den Sitz 2 eingeführten Leitungsanschluß 3; der ringförmige Wulst 101 wird in dieser Weise auf Distanz zur Anschlagfläche 102 des Betätigungsmittels 7 gehalten, wodurch folglich eine ungestörte Drehung des Betätigungsgriffes 7 ermöglicht wird und das Ventil 5 kann aus einer Sperrposition (Figuren 1 und 2) in eine Öffnungsposition (Fig. 3 und Fig. 4) gebracht werden.

Der oben erwähnte Mechanismus ist besser anhand der Figuren 5, 6 und 7 erkennbar.

In Fig. 5 stützt sich die Muffe 100 gegen die ebene Anschlagfläche 102 des Betätigungsgriffes 7 des Ventils 5 ab, und man kann erkennen, daß das kugelförmige Teil 28 des Ventils sowie dessen Durchgangsbohrung 29 sich in Sperrposition befinden.

Die verschiebbare Muffe 100 steht mit einer rohrförmigen Buchse 103, die von einer Feder 104 belastet ist, in Wirkverbindung. Auf der Vorderseite weist die Buchse 103 eine innere Nut 105 auf, die den Kugelkranz 27A aufnimmt, wobei die Kugeln 27 bei nicht in den Sitz 2 eingeführtem Leitungsanschlußstück 3 durch die Außenwand des in axialer Richtung bewegbaren und den Ventilsitz 2 mitformenden Hülsenkranzes 106 in ihrer Lage blockiert sind.

Ist der Leitungsanschluß 3 nicht in den Sitz 2 eingeführt, so ist die vorgespannte Feder 104 nicht in der Lage, die Muffe 100, gegen die sich die sehnenartige Anschlagfläche 102 des Betätigungsgriffes 7 abstützt, zu verschieben, da eine Bewegung der Buchse 103 bzw. der damit verbundenen Muffe 100 durch den Kugelkranz 27 verhindert wird.

Wenn der Leitungsanschluß 3 in den Sitz 2 eingeführt wird, werden die Kugeln 27 des Kranzes 27A radial verschoben und dringen in die Umfangsnut 26 des Leitungsanschlusses 3 ein, wobei sie somit aus der ringförmigen Kammer 105 der Buchse 103 austreten und somit ein Entspannen der Feder 104 sowie eine Verschiebung der Buchse 103 zusammen mit der Muffe 100 erlauben, die auf den Anschlußwulst 25B geführt wird, wobei der ringförmige Wulst 101 somit in Abstand zu der ebenen Oberfläche 102 gebracht wird, Figuren 6 und 7. Dadurch wird eine Drehung des Betätigungsgriffes 7 sowie der Kugel 28 erlaubt, die die Durchgangsbohrung 29 durchquert. Der Griff 7 wird aus einer in Fig. 6 dargestellten Sperrstellung in die in Fig. 7 dargestellte Durchflußstellung gebracht, um somit den Durchfluß des Fluids zu erlauben.

Wie in Fig. 7 dargestellt, stützt sich in dieser Lage der ringförmige Wulst 101 gegen den Umfang des Betätigungsgriffes 7 ab, der teilweise den ringförmigen Wulst 101 abschirmt.

Man kann weiterhin erkennen, daß der Kugelkranz 27A, der in die Umfangsnut 26 des Leitungsanschlußstückes 3 eindringt, von der inneren Umfangswand der Buchse 103 in Stellung gehalten wird und dadurch sicher vermieden wird, daß bei geöffnetem Ventil 5 der Leitungsanbschluß 3 aus der mit 1 allgemein gekennzeichneten Schnellkupplung entnommen werden kann. Um den Weg der von der Feder 104 belasteten Buchse 103 zu begrenzen, ist vorgesehen, daß das vordere Ende 107 der Buchse 103 auf einen von dem Leitungsanschluß 3 gebildeten Längsanschlag 108 trifft, sobald der Leitungsanschluß 3 vollständig in die Schnellkupplung 1 eingeschoben ist.

Um den Leitungsanschluß 3 aus der Vorrichtung 1 entfernen zu können, ist es erforderlich, daß das Ventil 5 geschlossen wird, wobei der Betätigungsgriff 7 in eine Lage gebracht wird, in welcher die ebene Anschlagfläche 102 parallel zur Stirnfläche des ringförmigen Wulstes 101 der Muffe 100 ist. Anschließend kann die Muffe 100 zusammen mit der Buchse 103 zum Betätigungsgriff 7 hin verschoben werden, bzw. zur ebenen Anschlußfläche 102, wobei die Feder 104 folglich erneut komprimiert wird und die Umfangsnut 105 der Buchse 103 erneut oberhalb des Kugelkranzes 27A angeordnet wird und somit eine Radialverschiebung der Kugeln 27 nach außen in die Nut oder Kammer 105 ermöglicht wird und dadurch ein leichtes Herausziehen des Leitungsanschlusses 3 gewährleistet wird. Falls der Schnellanschluß nicht verwendet wird, ist der Sitz 2 vollständig durch die Bauteile 21, 106 (Fig. 5) gesperrt, wodurch das Eindringen von Schmutz vermieden und Reinigungsarbeiten erleichtert werden.

## Patentansprüche

1. Kugelventil mit einem Betätigungsgriff (7) zum Verdrehen eines in einem Ventilgehäuse (25) angeordneten kugelförmigen Ventilkörpers (28), mit sich gegenüberliegenden Ventilgehäuseanschlüssen (25A, 30), wobei ein Gewindeanschluß (25A) mit einer Schnellkupplung (1) verbunden ist, wobei die Schnellkupplung einen rohrartigen Schnellkupplungskörper (99) und eine darauf in Längsrichtung verschiebbare Muffe (100) mit einem ringförmigen Wulst (101) aufweist, der in Absperrposition des Ventils und bei nicht in den Sitz (2) der Schnellkupplung eingeführten Leitungsanschluß (3) an einer Anschlagfläche (102) des Betätigungsgriffes (7) anliegt und bei Einführen des Anschlusses in den Sitz der Schnellkupplung ein Verschieben der Muffe auf Abstand zur Anschlagfläche des Betätigungsgriffes erfolgt,
**dadurch gekennzeichnet, dass**
a) der Schnellkupplungskörper (99) direkt mit einem Ventilgehäuseanschluß (25A) des Ventilgehäuses (25) verbunden ist,
b) der mit dem Schnellkupplungskörper (99) verbundene Ventilgehäuseanschluß (25A) gleichzeitig einen Führungskörper für die verschiebbare Muffe (100) der Schnellkupplung (1) bildet, und
c) die Anschlagfläche (102) des Betätigungsgriffes (7) durch eine Sehnenförmig gebildeten, ebenen Schnittfläche des Kreisrunden Betätigungsgriffes (7) gebildet ist.

2. Kugelventil mit Schnellkupplung, nach Anspruch 1, **dadurch gekennzeichnet, daß** die Muffe (100) mit einer drehbaren Buchse (103), die durch eine Feder (104) belastet ist, wirkverbunden ist, und daß die Buchse (103) innen eine Wand kleineren Druchmessers aufweist, die geeignet ist, Kugeln (27) eines Kugelkranzes (27A) in einer in den einführbaren Leitungsanschluß (3) eingearbeiteten äußeren Nut (26) zu halten, und daß auf die Innenwand kleineren Druchmessers des Leitungsanschlusses (3) eine Wand größeren Durchmessers folgt, die eine Umfangskammer (105) begrenzt, um eine nach außen gerichtete Radialverschiebung der Kugeln (27) zu ermöglichen.

3. Kugelventil mit Schnellkupplung, nach Anspruch 1, **dadurch gekennzeichnet, daß** der Leitungsanschluß (3) einen Längsanschlag für das freie Ende der Buchse (103) bildet.

4. Kugelventil mit Schnellkupplung nach Anspruch 1, **dadurch gekennzeichnet daß** im Betätigungsgriff (7) des Kugelventils (5) zwei gegenüberliegenden Anschlagflächen (102) vorgesehen sind.

## Claims

1. A ball valve having a driving handle (7) for rotating a ball valve body (28), arranged in a valve body (25), with opposite valve body fittings (25A, 30), wherein a threaded fitting (25A) is coupled to a quick coupling (1), said quick coupling comprising a quick coupling tubular body (99) and a bush (100), movable in a longitudinal direction on said quick coupling tubular body, and having an annular enlarged portion (101) which, at a shut-off position of said vale and with a duct fitting (3) not engaged in a seat (2) of said quick coupling, bears on an abutment surface (102) of said driving handle (7) and in which, as said fitting is engaged in the seat of said quick coupling, said bush is moved away from said abutment surface of said driving handle,
**characterized in that**
a) said tubular body (99) of said quick coupling is directly coupled to said fitting (25A) of said valve body (25),
b) said fitting (25A) of said valve body coupled to said tubular body (99) of said quick coupling simultaneously forming a guide body for said bush (100) sliding in said quick coupling (1), and
c) said abutment surface (102) of said driving handle (7) comprises a flat cutting surface, formed as a cutting cord, of the round-circular cross-section driving handle (7).

2. A ball valve provided with a quick coupling, according to Claim 1, **characterized in that** said bush (100) is operatively coupled to a rotatable sleeve (103), which is urged by a spring (104), and that said bush (103) comprises a smaller diameter inner wall, adapted to support ball elements (27) of a ball element crown (27A) arranged in an outer slot (26) formed in said engageable duct fitting (3), and that said smaller diameter inner wall of said duct fitting (3) is followed by a larger diameter wall delimiting an outwardly directed circumferential chamber (105) to allow said ball elements (27) to be radially driven.

3. A ball valve provided with a quick coupling, according to Claim 1, **characterized in that** said duct fitting (3) provides a longitudinal abutment for a free end portion of said sleeve (103).

4. A ball valve provided with a quick coupling, according to Claim 1, **characterized in that** two opposite abutment surfaces (102) are formed in the driving handle (7) of said ball valve (5).

## Revendications

1. Clapet à bille avec une poignée d'actionnement (7) pour la rotation d'un corps (28) du clapet à bille, disposé dans un corps à bille (25), avec des raccords (25A, 30) du corps du clapet opposés, où un raccord fileté (25A) est relié avec un accouplement rapide (1), où l'accouplement rapide est pourvu d'un corps tubulaire (99) d'accouplement rapide et d'une douille (100) déplaceable longitudinalement sur ledit corps tubulaire, avec un grossissement annulaire (101) lequel, dans la position de fermeture du clapet et avec le raccord (3) de tuyan degagé du siège (2) dudit accouplement rapide, sàppuye sur une surface de butée (102) de la poignée d'actionnement (7), et lorsque ledit raccord est angagé dans le siège dudit accouplement rapide a lieu un déplacement de la douille à distance de la surface d'abutément de la poignée d'actionnement,
**caractérisé en ce que**
a) le corps (99) dudit accouplement rapide est relié directement avec un raccord (25A) du corps (25) du clapet,
b) le raccord (25A) du corps du clapet relié avec le corps (99) de l'accouplement rapide forme en même temps un corps de guide pour la douille (100) coulissante dans l'accouplement rapide (1), et
c) la surface de butée (102) de la poignée d'actionnement (7) est formée par un surface de coupement plane, formée comme une corde, de la dite poignée d'actionnement rond-circulaire (7).

2. Clapet à bille avec un accouplement rapide selon la revendication 1, **caractérisé en ce que** la douille (100) est functionnellement reliée avec un fourreau pivotant (103) solicité par un ressort (104), et **en ce que** la douille (103) est pourvue d'une paroi intérieure de diamètre plus petit, pour supporter les billes (27) d'une couronne (27A) de billes dans une raissure extérieure (26), formée dans le raccord de tuyan (3) enfichable, et **en ce que** la paroi intériéure de diamètre plus petit du raccord (3) de tuyan est suiviè par une paroi de diamètre plus grand et délimitant une chambre circumferentielle (105) pour permettre un déplacement radial des billes (27) orienté vers le milieu extérieur.

3. Clapet à bille avec un accouplement rapide selon la revendication 1, **caractérisé en ce que** le raccord (3) de tuyan forme une butée longitudinale pour l'extrémité libre du fourreau (103).

4. Clapet à bille avec un accouplement rapide selon la revendication 1, **caractérisé en ce que** dans la poignéè (7) d'actionnement du clapet à bille (5) on a formé deux surfaces d'abutément (12) opposées.
